# EUROPEAN PATENT APPLICATION

(11) **EP 4 012 264 A1**
(43) Date of publication of application: **15.06.2022**
(21) Application number: 21212122.2
(22) Date of filing: 02.12.2021
(51) Int. Cl.: F24C 14/00

(54) **SELF-CLEANING OVEN**

(30) Priority: 09.12.2020 US 202017117010
(71) Applicant: WHIRLPOOL CORPORATION, Benton Harbor Michigan 49022 (US)
(72) Inventor: Buzzi, Ermanno, 21024 Cassinetta di Biandronno (VA) (IT); Hu, Hanks, 21024 Cassinetta di Biandronno (VA) (IT); Li, Ryan, 21024 Cassinetta di Biandronno (VA) (IT); Wu, Ping, 21024 Cassinetta di Biandronno (VA) (IT)
(74) Representative: Spina, Alessandro

(57) **Abstract**

A self-cleaning oven (100) is provided. Responsive to initiating a self-clean operation, a heating plate (108) in a cavity (106) of the oven (100) is powered to increase temperature of the heating plate (108). Responsive to the heating plate (108) being heated to above a predefined start temperature for a predefined soak period of time, one or more nozzles (112) are directed to introduce water onto the heating plate (108) to generate superheated steam until the heating plate (108) falls below a predefined reboot temperature. The power and watering operations are repeated according to a predefined number of clean cycles specified by the self-clean operation.

## Description

### TECHNICAL FIELD

Aspects of the disclosure relate to self-cleaning ovens, and more particularly, to ovens that implement a self-cleaning function using superheated steam.

### BACKGROUND

Ovens are kitchen appliances that are used to cook food. During the cooking process, the interior of the oven, where the food is cooked, may become soiled. For example, food may spill out of a baking pan or splatter during the cooking process. Due to the heat used for cooking, food particles may become baked onto the walls inside the oven. As a result, surfaces inside the oven may be difficult to clean by hand.

Many ovens have a self-cleaning feature. During self-cleaning, the oven interior is subjected to high temperatures. In some ovens, high temperatures are used to provide pyrolytic cleaning (*e.g.*, an approach in which an oven temperature of 600 degrees or higher is used), in which food particles are reduced to ash that collects on the bottom of the oven. The ash can be easily removed after the self-cleaning function has finished.

Some ovens have a self-cleaning feature that uses steam, rather than pyrolytic temperatures, to clean the oven walls. The use of steam requires heating the oven to a high enough temperature to cause water inside the oven to boil, in order to create the steam used for cleaning.

### SUMMARY

In one or more illustrative examples, a self-cleaning oven is provided. The oven includes a controller programmed to, responsive to initiating a self-clean operation, power a heating plate in a cavity of the oven to increase temperature of the heating plate. Responsive to the heating plate being heated to above a predefined start temperature for a predefined soak period of time, the controller directs one or more nozzles to introduce water onto the heating plate to generate superheated steam until the heating plate falls below a predefined reboot temperature. The controller repeats the power and water operations according to a predefined number of clean cycles specified by the self-clean operation.

In some examples, the controller is further programmed to send a signal to lock a door to the cavity responsive to initiating the self-clean operation; and send a second signal to unlock the door to the cavity responsive to conclusion of the predefined number of clean cycles and temperature of the heating plate falling below a predefined safety temperature.

In some examples, the predefined safety temperature is approximately 50 degrees Celsius. In some examples, the predefined start temperature is at least 420 degrees Celsius, and the predefined reboot temperature is approximately 200-300 degrees Celsius. In some examples, the predefined number of clean cycles is at least two cycles.

In some examples, the heating plate is located proximate to a bottom wall of the cavity and is composed of a temperature-resistant material with a layer of resistive coating applied to a side of the heating plate. In some examples, the predefined soak period of time is set empirically to allow food stain on the heating plate to be detached.

In some examples, the oven further includes an oven cavity, the heating plate having a heating element configured to heat the oven cavity. The over further includes a tank configured to maintain water, and a pump configured to receive water from the tank and project water onto the heating element via the one or more nozzles.

In one or more illustrative examples, a method for self-cleaning an oven is provided. Responsive to initiating a self-clean operation, a heating plate in a cavity of the oven is powered to increase temperature of the heating plate. Responsive to the heating plate being heated to above a predefined start temperature for a predefined soak period of time, one or more nozzles are directed to introduce water onto the heating plate to generate superheated steam until the heating plate falls below a predefined reboot temperature. The power and watering operations are repeated according to a predefined number of clean cycles specified by the self-clean operation.

In some examples, the method further includes locking a door to the cavity responsive to initiating the self-clean operation, and unlocking the door to the cavity responsive to conclusion of the predefined number of clean cycles and temperature of the heating plate falling below a predefined safety temperature.

In some examples, the predefined safety temperature is approximately 50 degrees Celsius. In some examples, the predefined start temperature is at least 420 degrees Celsius, and the predefined reboot temperature is approximately 200-300 degrees Celsius. In some examples, the predefined number of clean cycles is at least two cycles.

In some examples, the heating plate is located proximate to a bottom wall of the cavity and is composed of a temperature-resistant material with a layer of resistive coating applied to a side of the heating plate. In some examples, the predefined soak period of time is set empirically to allow food stain on the heating plate (108) to be detached.

### BRIEF DESCRIPTION OF THE DRAWINGS

FIG. 1 illustrates an example self-cleaning oven configured to use the thermal shock effect and superheated steam to perform a clean cycle of the oven;
FIG. 2 illustrates an example controller configured to operate the components of the oven to perform a self-clean cycle of the oven;
FIG. 3 illustrates an example process for using the thermal shock effect and superheated steam to perform a clean cycle of the oven;
FIG. 4 illustrates an example sample requiring cleaning; and
FIG. 5 illustrates the example sample after cleaning according to the disclosed approach.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

The higher the cooking temperatures and the longer the cooking times in an oven, the harder it may be for a user to clean any food stain that is deposited in the oven cavity. Food stains gradually deposit and crust on the cavity walls, especially when oil or other stains drop on a heating plate of the oven. Pyrolysis is widely used on free range and other ovens, but the process may take many hours to complete a clean cycle and it is very energy consumptive.

Aspects of the disclosure provide an effective solution to clean food stains deposited or crusted onto the glass ceramic heating plate and cavity walls of an oven during cooking. The disclosed approach employs the thermal shock effect and superheated steam to help the user clean the oven. This approach improves the efficiency and effectiveness of the clean cycle, with a significantly reduced the cycle time compared to a pyrolysis approach. In many examples, the improved process is 3-5 times faster than a pyrolysis approach. Moreover, the disclosed approach improves the user experience, as users may simply press a button on the user interface to begin the clean cycle. Further aspects of the approach are described in detail herein.

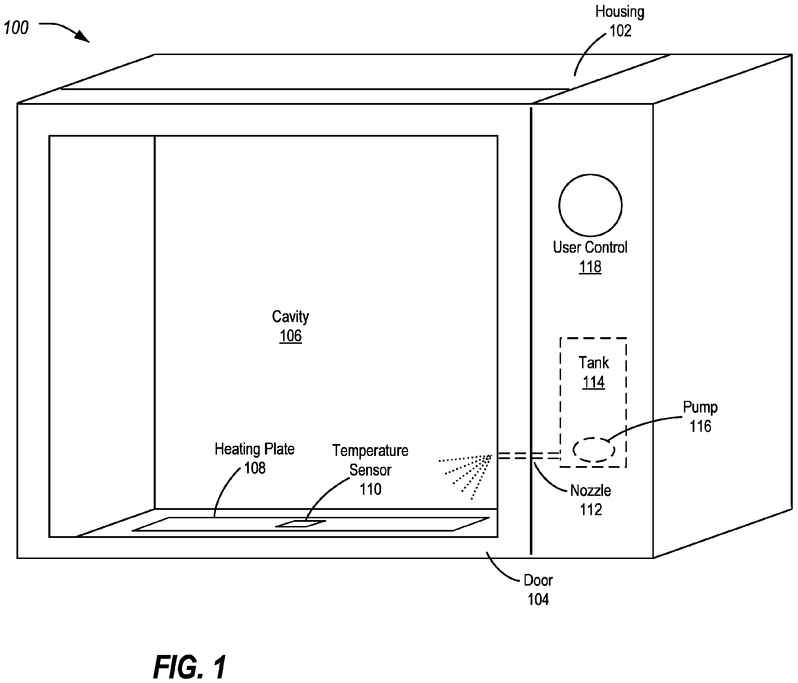

FIG. 1 illustrates an example self-cleaning oven 100 configured to use the thermal shock effect and superheated steam to perform a clean cycle of the oven 100. The oven 100 may be of various types, such as a conventional oven, a microwave oven, or a combination microwave oven. As illustrated, the oven 100 generally has a housing 102 that defines a cavity 106. The cavity 106 generally has a back wall, a top wall, a bottom wall, and a pair of opposing side walls. The oven 100 also includes a door 104 to the cavity 106. The door 104 may, in some cases, include a latch mechanism to lock the door 104 in a closed position during oven operation.

A heating plate 108 may be located at the bottom of the cavity 106. However, in other examples, the heating plate 108 may be equipped to the other walls of the cavity 106. The heating plate 108 may be made of a high temperature resistant glass ceramic plate with a layer of resistive coating (*e.g.*, on the underside of the glass ceramic plate) to generate heat when conducted. The resistive coating may be a metal oxide or other resistive material such as a carbon nanotube material. The resistive coating may operate as a heating element, such that the heating plate 108 generates heat when electrical power is applied to the coating. When powered, the resistive coating may allow the glass ceramic heating plate 108 to be heated up to 420 degrees Celsius or above.

A temperature sensor 110 is located on or about the heating plate 108 to measure the temperature of the heating plate 108. In an example the temperature sensor 110 is a thermocouple that produces a temperature-dependent voltage as a result of the thermoelectric effect. That voltage can then be interpreted to measure the temperature of the heating plate 108.

One or more nozzles 112 are located proximate to the heating plate 108. The nozzles 112 may be configured to spray water onto the heating plate 108. In an example, the water may be held in a refillable tank 114. In some examples, the oven 100 may be connected to a water line to receive water from a municipal system, with or without a tank 114. A pump 116 may be used to pressurize water from the tank 114 or water line for delivery onto the heating plate 108 via the one or more nozzles 112. When the heating plate 108 is sufficiently heated, sprayed water encountering the heating plate 108 is converted into superheated steam in the oven cavity 106.

A user control 118 is provided to select one or more self-cleaning modes of operation for the oven 100. The user control 118 may include a knob, button, or other control for controlling the self-cleaning cycle. The user control 118 may accordingly allow a user to select different levels of self-cleaning. For instance, the user may use the user control 118 to select a heavy duty or a normal duty cleaning, depending on the stains accumulated in the oven cavity 106. In some examples, a normal cleaning cycle may include a first predefined number of steam cycles, while a heavy-duty cleaning cycle may include a second predefined number of steam cycles, where the second predefined number is greater than the first predefined number. In many examples, the number of cleaning cycles is at least two cycles.

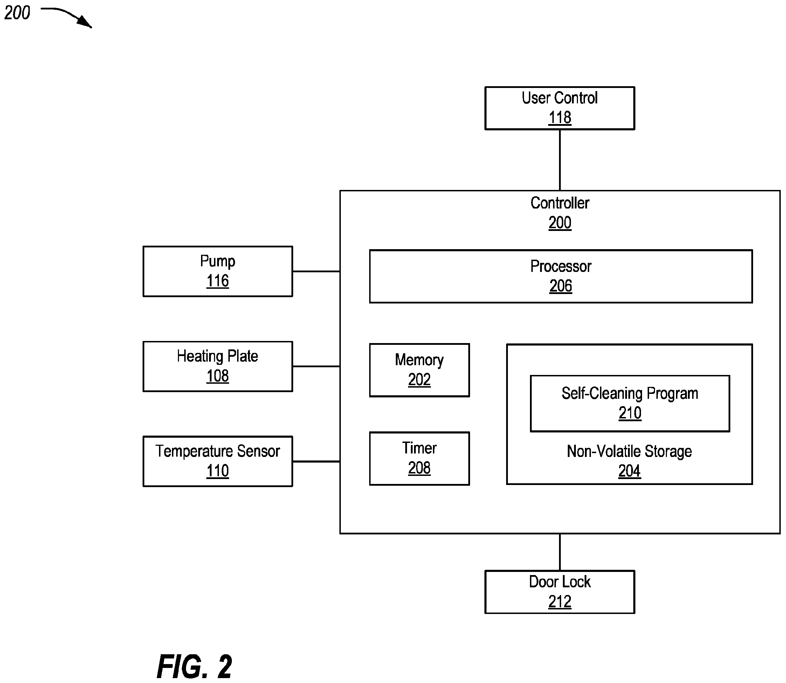

FIG. 2 illustrates an example controller 200 configured to operate the components of the oven 100 to perform a self-clean cycle of the oven 100. The controller 200 may include a memory 202, a non-volatile storage 204, a processor 206, and a timer 208. The non-volatile storage 204 may store operations for a self-cleaning program 210.

The memory 202 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. The non-volatile storage 204 may include one or more persistent data storage devices such as a hard drive, optical drive, tape drive, non-volatile solid-state device, cloud storage or any other device capable of persistently storing information.

The processor 206 may include one or more microprocessors, micro-controllers, digital signal processors, microcomputers, central processing units (CPU), graphical processing units (GPU), tensor processing units (TPU), field programmable gate arrays, programmable logic devices, state machines, logic circuits, analog circuits, digital circuits, or any other devices that manipulate signals (analog or digital) based on computer-executable instructions residing in memory 202. The processor 206 also make use of a timer 208 to perform timing and counting operations, allowing the processor 206 to carry on with other processing while the timer 208 measures delay.

The processor 206 may be configured to read into memory 202 and execute computer-executable instructions residing in the non-volatile storage 204, such as those of the self-cleaning program 210. Upon execution by the processor 206, the computer-executable instructions may cause the oven 100 to implement one or more of the algorithms and/or methodologies disclosed herein.

The controller 200 may be electrically connected to signaling interfaces of other components of the oven 100, thereby allowing the processor 206 of the controller 200 to manipulate the functions of the oven 100. For example, the controller 200 may be configured to receive user input from the user control 118, such as requests to initiate a self-clean cycle. The controller 200 may also be configured to receive temperature input from the temperature sensor 110 of the heating plate 108. The controller 200 may also be configured to control operation of the heating plate 108, including to apply power to heating element of the heating plate 108 to warm the heating plate 108, as well as to discontinue applying power to the heating element of the heating plate 108. The controller 200 may also be configured to control the operation of the pump 116 to selectively spray water from the one or more nozzles 112 onto the heating plate 108. The controller 200 may also control a door lock 212 to selectively control the latch mechanism of the door 104 to prevent the door 104 from being opened during cleaning cycles.

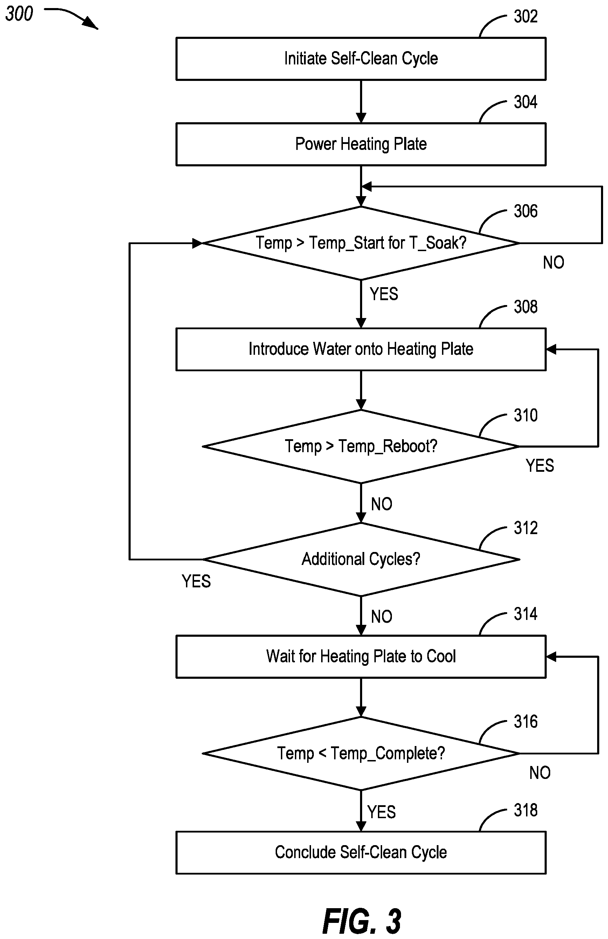

FIG. 3 illustrates an example process 300 for using the thermal shock effect and superheated steam to perform a clean cycle of the oven 100. In an example, the process 300 may be performed by the oven 100 under the operation of the self-cleaning program 210 executed by the processor 206 of controller 200.

At operation 302, the oven 100 initiates a self-clean cycle. In an example, the controller 200 may receive input from the user control 118 indicative of a user request to perform a normal duty cleaning. In another example, the user may request a heavy-duty cleaning. In some examples, the heavy-duty cleaning may involve a greater number of heating cycles as compared to the normal duty cleaning cycle. In some examples, the controller 200 may latch the door using the door lock 212 responsive to initiation of the clean cycle.

At operation 304, the oven 100 powers the heating plate 108. This may accordingly allow the heating plate 108 to warm up. The temperature of the heating plate 108 throughout the process 300 may be ascertained by the controller 200 using data received from the temperature sensor 110.

At operation 306, the oven 100 determines whether the temperature of the heating plate 108 exceeds a start temperature (TEMPₛₜₐᵣₜ) for a certain period of time (Tₛₒₐₖ). In an example, TEMPₛₜₐᵣₜ is at least 420 degrees Celsius. Tₛₒₐₖ may be set empirically to allow the food stain on the heating plate to be detached easily. An example value of Tₛₒₐₖ may be, for example, on the order of 15 minutes. Passage of the Tₛₒₐₖ time may be monitored by the controller 200 using the timer 208. If TEMPₛₜₐᵣₜ has been achieved for Tₛₒₐₖ, control passes to operation 308. If not, control remains at operation 306.

At operation 308, the oven 100 introduces water onto the heating plate 108 of the cavity 106. In an example, the oven 100 sprays water from the tank 114 onto the heating plate 108 to generate superheated steam to detach carbonized food stains on the glass ceramic plate (and other stains in the cavity). In an example, the one or more nozzles 112 are provided in the cavity 106 to spray pumped water onto the heating plate 108. It should be noted that use of steam shortens the cleaning cycle with lower energy consumption as compared to pyrolysis, which would require heating of the food stain to around 480 degrees Celsius for 2-3 hours to carbonize the food completely. Instead, thermal shock and steam is employed to detach the food stain that adheres to the cavity; thus, the stain may only be partly carbonized but easily removable.

At operation 310, the oven 100 determines whether the temperature of the heating plate 108 is below a predetermined reboot temperature (TEMP_{reboot}). In an example, TEMP_{reboot} is approximately 200-300 degrees Celsius. If the temperature of the heating plate 108 remains at or above TEMP_{reboot}, control returns to operation 308 to continue introducing water into the cavity 106. If, however, the temperature has become below TEMP_{reboot}, control passes to operation 312.

At operation 312, the oven 100 determines whether additional cleaning cycles are remaining for the selected clean cycle. If so, control returns to operation 306 to again heat the heating plate 108 up to TEMPₛₜₐᵣₜ, and spray water onto the heating plate 108 again, according to the remaining predetermined number of clean cycles. If not, control passes to operation 314 in which heating plate 108 operation is disengaged to wait for the heating plate 108 to cool.

At operation 316, the oven 100 determines whether the heating plate temperature is below oven heating plate a predetermined safe clean temperature (TEMP_{safe}). In an example, TEMP_{safe} is approximately 50 degrees Celsius. If TEMP_{safe} has not been reached, control returns to operation 314 to allow for additional cooling. If the heating plate 108 has cooled to below TEMP_{safe}, control passes to operation 318 to conclude the self-clean cycle. In some examples, the controller 200 may also unlatch the door using the door lock 212 once the temperature is cooled down to TEMP_{safe} or below. After operation 318, the process 300 ends.

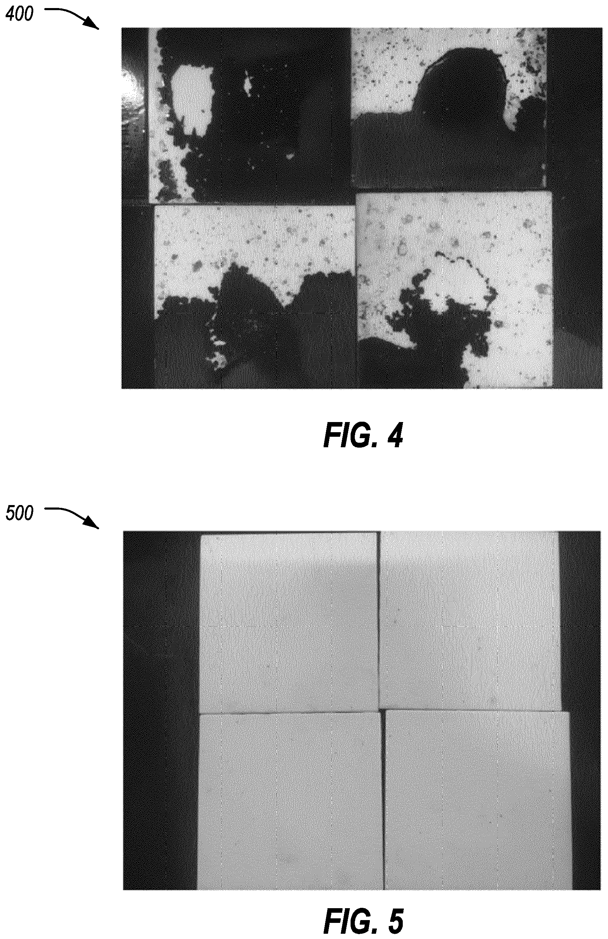

FIG. 4 illustrates an example sample 400 requiring cleaning. FIG. 5 illustrates the example sample 500 after cleaning according to the disclosed approach. Thus, it can be seen that the stands can be cleaned completely following the process 300 that employs the thermal shock effect and superheated steam to clean the oven 100. This approach improves the efficiency and effectiveness of the clean cycle, with a significantly reduced the cycle time compared to a pyrolysis approach.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A self-cleaning oven (100), comprising:
a controller (200) programmed to
responsive to initiating a self-clean operation, power a heating plate (108) in a cavity (106) of the oven (100) to increase temperature of the heating plate (108);
responsive to the heating plate (108) being heated to above a predefined start temperature for a predefined soak period of time, direct one or more nozzles (112) to introduce water onto the heating plate (108) to generate superheated steam until the heating plate (108) falls below a predefined reboot temperature; and
repeat the power and water operations according to a predefined number of clean cycles specified by the self-clean operation.

2. The oven (100) of claim 1, wherein the controller (200) is further programmed to:
send a signal to lock a door (104) to the cavity (106) responsive to initiating the self-clean operation; and
send a second signal to unlock the door (104) to the cavity (106) responsive to conclusion of the predefined number of clean cycles and temperature of the heating plate (108) falling below a predefined safety temperature.

3. The oven (100) of claim 2, wherein the predefined safety temperature is approximately 50 degrees Celsius.

4. The oven (100) of claim 1, wherein predefined start temperature is at least 420 degrees Celsius, and the predefined reboot temperature is approximately 200-300 degrees Celsius.

5. The oven (100) of claim 1, wherein the predefined number of clean cycles is at least two cycles.

6. The oven (100) of claim 1, wherein the heating plate (108) is located proximate to a bottom wall of the cavity (106) and is composed of a temperature-resistant material with a layer of resistive coating applied to a side of the heating plate (108).

7. The oven (100) of claim 1, wherein the predefined soak period of time is set empirically to allow food stain on the heating plate (108) to be detached.

8. The oven (100) of claim 1, further comprising:
an oven cavity (106);
the heating plate (108) having a heating element (108) configured to heat the oven cavity (106);
a tank (114) configured to maintain water; and
a pump (116) configured to receive water from the tank (114) and project water onto the heating element (108) via the one or more nozzles (112).

9. A method for self-cleaning an oven (100), comprising:
responsive to initiating a self-clean operation, powering a heating plate (108) in a cavity (106) of the oven (100) to increase temperature of the heating plate (108);
responsive to the heating plate (108) being heated to above a predefined start temperature for a predefined soak period of time, directing one or more nozzles (112) to introduce water onto the heating plate (108) to generate superheated steam until the heating plate (108) falls below a predefined reboot temperature; and
repeating the powering and water operations according to a predefined number of clean cycles specified by the self-clean operation.

10. The method of claim 9, further comprising:
locking a door (104) to the cavity (106) responsive to initiating the self-clean operation; and
unlocking the door (104) to the cavity (106) responsive to conclusion of the predefined number of clean cycles and temperature of the heating plate (108) falling below a predefined safety temperature.

11. The method of claim 10, wherein the predefined safety temperature is approximately 50 degrees Celsius.

12. The method of claim 9, wherein the predefined start temperature is at least 420 degrees Celsius, and the predefined reboot temperature is approximately 200-300 degrees Celsius.

13. The method of claim 9, wherein the predefined number of clean cycles is at least two cycles.

14. The method of claim 9, wherein the heating plate (108) is located proximate to a bottom wall of the cavity (106) and is composed of a temperature-resistant material with a layer of resistive coating applied to a side of the heating plate (108).

15. The method of claim 9, wherein the predefined soak period of time is set empirically to allow food stain on the heating plate (108) to be detached.
